# EUROPEAN PATENT APPLICATION

(11) **EP 3 745 682 A1**
(43) Date of publication of application: **02.12.2020**
(21) Application number: 20165377.1
(22) Date of filing: 24.03.2020
(51) Int. Cl.: H04L 29/12, H04L 12/24, H04W 8/26, H04W 36/08, H04W 84/12, H04W 88/08

(54) **WIRELESS ACCESS SYSTEM, CONFIGURATION METHOD AND WIRELESS ROUTING DEVICE**

(30) Priority: 29.05.2019 CN 201910459303
(71) Applicant: HAN Networks Co., Ltd., Beijing (CN)
(72) Inventor: ZHOU, Ke, Beijing (CN); CHANG, Zhimin, Beijing (CN)
(74) Representative: Cabinet Chaillot

(57) **Abstract**

The invention discloses a wireless access system, a configuration method, and wireless routing device, and it belongs to the technical field of wireless network deployment. The wireless access system comprises a plurality of wireless routing devices, and each of the plurality of wireless routing devices comprises: a virtual access network constructed by using a local area network of the wireless routing device; a forwarding unit for forwarding external data received by the virtual access network to an external network; a configuration unit for configuring various access parameters of the virtual access network constructed in the virtual access network; a configuration server configured to issue a configuration scheme to each configuration unit so as to control the configuration units to configure all of the plurality of wireless routing devices with uniform access parameters; the virtual access network works in a three-layer network mode. The present invention has the beneficial effects that the wireless roaming of the user terminal is supported, centralized AC equipment does not need to be arranged, the message forwarding performance of the user terminal is not influenced, and roaming switching of a wireless network can be smoothly completed.

## Description

### BACKGROUND OF THE INVENTION

### 1. Field of the Invention

The invention relates to the technical field of wireless network deployment, and more particularly, to a wireless access system, a configuration method, and wireless routing device.

### 2. Description of the Related Art

During wireless network deployment, wireless access devices (Access Points, APs) in some cases have to be divided in different two-layer domains due to some environmental considerations. For example, when deploying outdoor APs, it is chosen to set up the 4G network on each AP as an uplink, that is to say, building an independent two-layer network for an AP. The APs work in a two-layer network mode, and different APs may not communicate with each other. Since APs work in the two-layer network mode, network forwarding requires information, such as hardware MAC addresses and IP addresses of the APs. However, it is known that different APs may not communicate with each other, so when the user terminal roams from one AP to another, the device may fail to identify the APs correctly since both the gateway IP address and MAC address change, hence wireless roaming failure occurs, and internet experience is lowered for most users.

In the prior art, some manufacturers may configure a wireless controller (Access Point Controller, AC) to manage all APs. A hard AC or a soft AC is used to perform unified message forwarding on all APs, so that the problem of roaming failure may be solved. However, since different APs may not communicate with each other, all network information of users is managed by the AC in the cloud. All the user messages are forwarded by ACs. When the number of APs and user terminals accessing the AC increases, or when the number of network nodes between the APs and the AC increases, the message forwarding performance of the user terminal will be greatly influenced due to the limitation of the AC itself, and internet experience is lowered for most users.

### SUMMARY OF THE INVENTION

Given that the foregoing problems exist in the prior art, the present invention provides technical solutions of a wireless access system, a configuration method and a wireless routing device, so that the wireless roaming of the user terminal is allowed, centralized AC equipment does not need to be arranged, the message forwarding performance of the user terminal is not influenced, and roaming switching of a wireless network can be smoothly completed.

The technical solutions are as follows:
A wireless access system allowing wireless roaming of a user terminal, the wireless access system comprising:
a plurality of wireless routing devices, capable of wireless roaming, arranged in continuous geographic areas, respectively, wherein each of the plurality of wireless routing devices comprise:
a virtual access network constructed by using a local area network of the wireless routing device, the virtual access network being accessed by a user terminal within a network coverage of the wireless routing device;
a forwarding unit, connected to the virtual access network, and configured to forward external data received by the virtual access network to an external network;
a configuration unit, connected to the virtual access network, and configured to configure various access parameters of the virtual access network constructed in the virtual access network;
a configuration server connected to each of the wireless routing devices, configured to issue a configuration scheme to each configuration unit so as to control the configuration unit to configure all of the plurality of wireless routing devices with uniform access parameters;
wherein the virtual access network works in a three-layer network mode.

Preferably, in the wireless access system, wherein the access parameters comprise a gateway IP address and a gateway MAC address of the virtual access network;
each of the virtual access networks has the same gate IP address; and
each of the virtual access networks has the same gate MAC address.

Preferably, in the wireless access system, wherein the access parameters further comprise a network address range of the virtual access network;
wherein a Dynamic Host Configuration Protocol (DHCP) address pool is pre-configured on the configuration server, a network address range is assigned to each of the virtual access networks in the DHCP address pool, and the network address ranges of the virtual access networks do not conflict with each other.

Preferably, in the wireless access system, wherein device access ranges of adjacent virtual access networks have an overlapping portion.

A method for configuring a wireless access system allowing the wireless roaming of a device, wherein a wireless access system is provided, the wireless access system comprises: a plurality of wireless routing devices, capable of wireless roaming, arranged in continuous geographic areas, respectively, and a configuration server;
a virtual access network is configured in each of the plurality of wireless routing devices, the virtual access network is constructed by using a local area network of the wireless routing device, the virtual access network is accessed by a user terminal within a network coverage of the wireless routing device;
a forwarding unit is provided in each of the plurality of wireless routing devices, and is configured to forward external data received by the virtual access network to an external network;
, in the wireless access system, the user terminal initially accesses each of the plurality of different wireless routing devices;
wherein the configuration method comprises:
Step S1, pre-setting a configuration scheme in the configuration server, the configuration scheme comprising configuration information for configuring the access parameters of each of the virtual access networks;
Step S2, issuing, by the configuration server, the configuration scheme to each of the plurality of wireless routing devices; and
Step S3, providing a configuration unit in each of the plurality of wireless routing devices, configuring, by each of the configuration units, the corresponding virtual access network according to the configuration scheme so as to configure all of the virtual access networks with uniform access parameters.

Preferably, in the configuration method, wherein the access parameters comprise a gateway IP address and a gateway MAC address of the virtual access network;
in Step S3, each of the configuration units configures the corresponding virtual access network, so that each of the virtual access networks has the same gate IP address; and
each of the configuration units configures the corresponding virtual access network, so that each of the virtual access networks has the same gate MAC address.

Preferably, in the configuration method, wherein the access parameters further comprise a network address range of the virtual access network;
in Step S1, a Dynamic Host Configuration Protocol (DHCP) address pool is pre-configured on the configuration server by a user, a network address range is assigned to each of the virtual access networks to be configured in the DHCP address pool, and the network address ranges of the virtual access networks do not conflict with each other; and
in step S3, each of the configuration units configures the network address range of the corresponding virtual access network according to the configuration scheme issued.

Preferably, in the configuration method, wherein the device access ranges of adjacent virtual access networks have an overlapping portion.

A wireless routing device is provided, the wireless routing device is incorporated into a wireless access system, and is connected to a configuration server;
the wireless routing device comprises:
a virtual access network constructed by using a local area network of the wireless routing device, the virtual access network is accessed by a user terminal within a network coverage of the wireless routing device ;
a forwarding unit, connected to the virtual access network, and configured to forward external data received by the virtual access network to an external network;
a configuration unit, connected to the virtual access network, the configuration server issues a configuration scheme to the configuration unit, and is configured to configure various access parameters of the virtual access network constructed in the virtual access network according to the configuration scheme;
all of the wireless routing devices in the wireless access system are configured to configure uniform access parameters.

By adopting the above-mentioned technical solutions, the present invention has the beneficial effects shown below.
1) A wireless access system is provided. The wireless access system allows the wireless roaming of the user terminal, so that roaming failure may not occur due to the presence of different network environments. A centralized AC equipment does not need to be arranged, the message forwarding performance of the user terminal cannot be influenced, and roaming switching of a wireless network can be smoothly completed.
2) A method for configuring a wireless access system is provided, and the configuration method is capable of configuring the above-mentioned wireless access system.

### BRIEF DESCRIPTION OF THE DRAWINGS

The accompanying drawings, together with the specification, illustrate exemplary embodiments of the present disclosure, and, together with the description, serve to explain the principles of the present invention.
Figure 1 is a schematic diagram of managing APs by using a centralized AC in the prior art;
Figure 2 is a schematic diagram showing a structure of a wireless access system according to a preferred embodiment of the present invention;
Figures 3 and 4 are schematic diagrams of a wireless access system working in a three-layer network mode according to a preferred embodiment of the present invention;
Figure 5 is a schematic diagram, in which a configuration server configures a DHCP address pool, according to a preferred embodiment of the present invention; and
Figure 6 is a flowchart of a method for configuring a wireless access system according to a preferred embodiment of the present invention.

### DETAILED DESCRIPTION

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

As used herein, the term "plurality" means a number greater than one.

Hereinafter, certain exemplary embodiments according to the present disclosure will be described with reference to the accompanying drawings.

In the prior art, conventional APs usually work in a two-layer network mode, that is, transparent transmission of wireless message is achieved via a bridge interface, and IP addresses of user terminals and IP addresses of the APs are uniformly assigned by an uplink gateway. As a result, when wireless roaming takes place, since different APs are located in different network environments, and the different APs may not communicated with each other, the user terminal is required to be re-authenticated and to re-acquire the network address each time the network handover is done, so that roaming failure may often occur, and internet experience is lowered for most users.

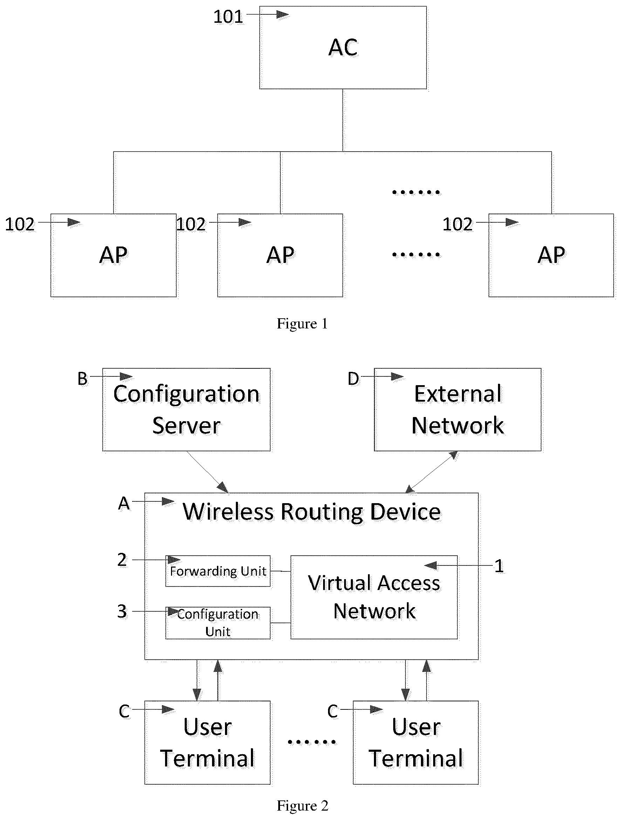

In the prior art, for the above-mentioned problems, a centralized AC is used for the unified management of the APs, as shown in Figure 1. The centralized AC 101 performs centralized data message forwarding and management of the plurality of APs 102. More specifically, all the APs 102 are associated with the AC 101, and corresponding data forwarding tunnels are established. The user's data message and IP address assignment are processed by the AC 101. In this solution, the AC acts as a unified gateway to which the user terminal is accessible. The issue of roaming failure may be solved by using the solution. However, due to the limitation of the performance of the AC 101, when the number of user terminal accessing to the AC 101 increases, and the number of network nodes between the APs 102 and the AC 101 increases, the forwarding performance of the AC 101 will be affected, and internet experience is also lowered for most users.

In order to solve the above-mentioned problems in the prior art, the present invention provides a solution for a wireless access system. The wireless access system allows the user terminal, accessing to the wireless access system, to roam wirelessly within the coverage area of the wireless access system. Therefore, the issue of wireless roaming failure of the device is solved.

As shown in Figure 2, the wireless access device comprises:
a plurality of wireless routing devices A (only one wireless routing device is shown in Figure 2), arranged in continuous geographic areas, wherein each of the plurality of wireless routing devices A comprises:
   a virtual access network 1 constructed by using a local area network of the wireless routing device A, the virtual access network 1 being accessed by a user terminal C within a network coverage of the wireless routing device A;
   a forwarding unit 2, connected to the virtual access network 1, and configured to forward external data received by the virtual access network 1 to an external network D;
   a configuration unit 3, connected to the virtual access network 1, and configured to configure various access parameters of the virtual access network constructed in the virtual access network 1;
   wherein the wireless access system further comprises:
      a configuration server B, connected to each of the wireless routing devices A respectively, configured to issue a configuration scheme to each configuration unit 2 so as to control the configuration units 2 to configure all of the plurality of wireless routing devices A with uniform access parameters;
      wherein the virtual access network 1 works in a three-layer network mode.
      in particular, in this embodiment, in this wireless access system, a plurality of wireless routing devices A are configured in continuous geographic areas, for example, in the same building, the same industrial park or even the same commercial area. Each of the wireless routing devices A allows wireless roaming function, and has a basic configuration required for the wireless roaming. For example, all of the wireless routing devices A have the same Service Set Identifier (SSID). Authentication process of the SSID for each of the wireless routing devices A is the same, so details will not be repeated herein. Among adjacent two or more wireless routing devices A there are overlapping network coverage areas, thereby facilitating the wireless roaming of the user terminals.

In this embodiment, a single wireless roaming device A is described in details, and all the other wireless roaming devices A have the same components and are configured in the same manner as the single wireless roaming device A, so the description thereof will not be repeated.

In the single wireless roaming device A of the wireless access system, a virtual access network 1 is constructed by using a local area network of the wireless routing device A. The virtual access network 1 has a virtual access network, access parameters of the virtual access network can be configured as desired. The virtual access network 1 may be provided to the user terminal for performing network access after being configured. After the user terminal accesses to the virtual access network 1, the user terminal forwards the data message to the external network through the forwarding unit 2, so as to connect the user terminal C to the external network D. The external network D may be Internet, and the details will not be repeated herein.

In this embodiment, the configuration server B of the wireless access system is provided to the management personnel for making a configuration scheme. The configuration scheme comprises various access parameters of the virtual access network 1 constructed in the wireless routing device A. After setting up the configuration scheme, the configuration server B issues the configuration scheme to each of the wireless routing devices A.

After receiving the configuration scheme issued by the configuration server B, the configuration unit 3 of the wireless routing device A configures the virtual access network 1 according to the various access parameters of the configuration scheme. Since each of the configuration schemes issued to the wireless routing devices A is the same, the final configuration result shows that the access parameters of the virtual access network 1 in each of the wireless routing devices A are the same, that is, each of the virtual access networks 1 is uniformly configured.

In this embodiment, once all the virtual access networks 1 are uniformly configured, the wireless access system may be provided to the user terminal for accessing. The user terminal C accesses to any one of the wireless routing device A in the wireless access system. When the user terminal C plans to perform wireless roaming, it may send a request for wireless roaming, another wireless routing device A, as a roaming target, may perform authentication on the user terminal C. Since the access parameters of the virtual access network 1 before and after the roaming operations keep the same, the wireless roaming authentication may not fail due to the changes of the network environment. The user terminal C is capable of successfully roaming from one wireless routing device A to another wireless routing device A to continue to go online.

In this embodiment, the wireless routing devices A refer to any wireless routers capable of implementing the wireless roaming function. Furthermore, the wireless routing devices A may be an intelligent wireless router, which implements the wireless roaming function, and which may be automatically configured.

In this embodiment, the virtual access network 1 is constructed by using an internal local area network of the wireless routing device A for allowing the user terminal to access the virtual network. All the network range, the gateway MAC address and the gateway IP address of the virtual access network may be dynamically configured and managed (details may be shown hereinafter).

In this embodiment, the forwarding unit 2 may be a forwarding unit of the wireless routing device A for implementing the routing and forwarding functions of the wireless routing device A. The object of the forwarding is the data message transmitted through the virtual access network 1.

In this embodiment, the configuration unit 3 may be implemented by using a processing chip of the wireless routing device A.

In this embodiment, the configuration server B may be any server capable of configuring the access parameters and issuing the configuration scheme to the wireless routing device A, for example, the configuration server B can be implemented by using a remote server, or by using a computer, or even by using a mobile terminal. That is, the configuration server B is formed under the following conditions: 1) it may be connected to the plurality of wireless routing devices A and may perform data transmission; 2) the management personnel may configure the access parameters through the configuration server B.

In a preferred embodiment of the invention, the access parameters comprise a gateway IP address and a gateway MAC address of the virtual access network 1;
each of the virtual access networks 1 has the same gate IP address; and
each of the virtual access networks 1 has the same gate MAC address.

Preferably, in this embodiment, the gateway MAC address and the gateway IP address of the virtual access network 1 may be dynamically configured so that the gateway MAC addresses and the gateway IP addresses of the virtual access networks of all the wireless routing devices A are the same. In this way, when the user terminal C is performing wireless roaming, roaming failure may not occur due to the presence of different network environments in which the different APs are located.

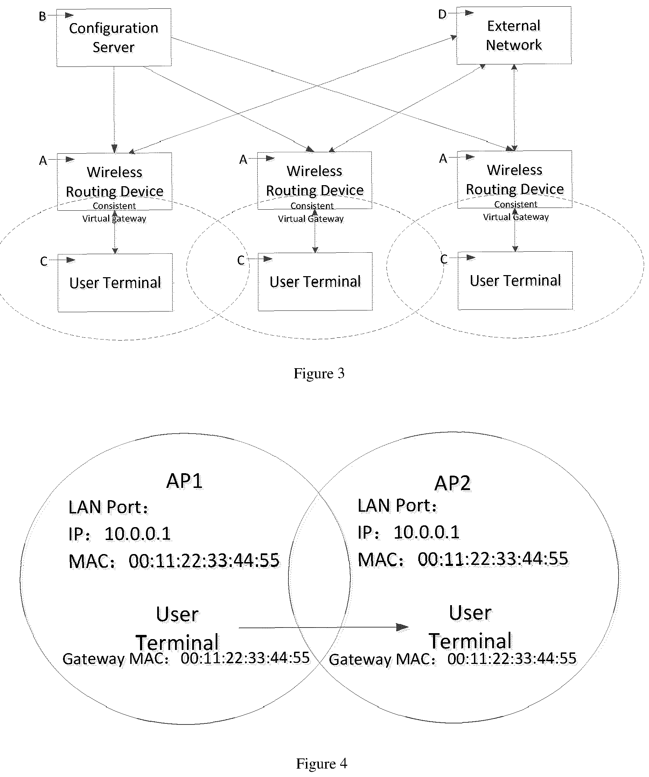

After configuration is completed, the wireless access system may form a two-layer virtual network domain structure as shown in Figure 3. In Figure 3, the configuration server B accesses each distributed wireless routing device A. Each wireless routing device A is provided to a corresponding user terminal C (only one configuration server B is shown in Figure 3). Each of the wireless routing devices A has an overlapping network coverage range to allow the user terminals C to roam wirelessly.

After the configuration of the configuration server B, the virtual access networks with the same gateway MAC addresses and the same gateway IP addresses are formed in all the wireless routing devices A and are provided to the users for network access, to forward to the external network.

Since the virtual access network works in a three-layer network mode, all the gateway addresses of the user terminals C point to a lan port address of the virtual access network. In addition, the network status information of the lan port is limited to a downlink range of the virtual access network (for the user terminal C, the virtual access network is an AP, and the description related to the AP below refers to the description of the virtual access network). Therefore, the gateway IP addresses and the gateway MAC addresses of the virtual access network may be adjusted. During the process of wireless deployment, even if the gateway MAC addresses and the gateway IP addresses of all the virtual access networks are configured to be the same, the actual network environment may not be influenced. The configuration of the virtual gateway addresses allows any one of the wireless routing devices A to respond to the roaming request sent by the user terminal C, so as to "deceive" the user terminal C. As shown in Figure 4, when the user terminal C makes a roaming request from AP1 to AP2, since the network information of the lan port of the AP2 is consistent with that of the AP1, successful roaming may be achieved without re-authentication of the network.

In a preferred embodiment of the invention, the access parameters further comprise a network address range of the virtual access network;
wherein a Dynamic Host Configuration Protocol (DHCP) address pool is pre-configured on the configuration server, a network address range is assigned to each of the virtual access networks in the DHCP address pool, and the network address ranges of the virtual access networks do not conflict with each other.

In particular, during the process of wireless roaming, one aspect to be considered is a change in network environment, and further aspect to be considered is the problem of IP addresses conflict after roaming successfully takes place, ensuring the network is available after the roaming process. Since the existing APs may not communicate with each other, different virtual access networks needs to be configured with different network address ranges for satisfying the above-mentioned requirements. Therefore, in this embodiment, the DHCP address pool needs to be configured to be large enough to ensure that enough addresses are available for the user terminals. Then, different network address ranges are assigned to each of the virtual access networks in the DHCP address pool, thereby ensuring that the IP addresses assigned to the user terminals by the different virtual access networks will not conflict with each other.

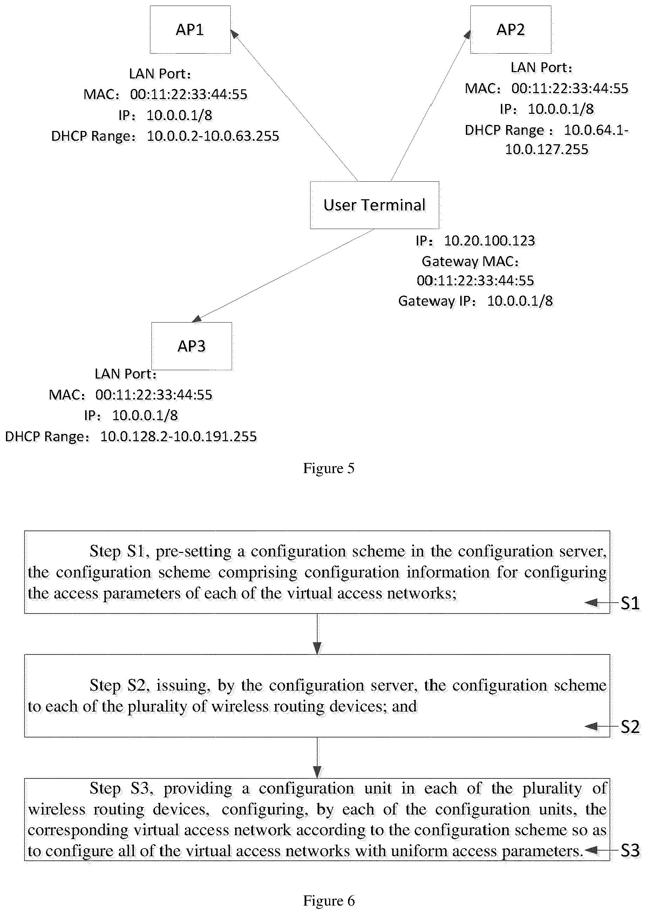

For example, in a network scenario where 1000 APs are deployed for covering approximately 1 million users, a two-layer network domain with a DHCP address pool of "10.0.0.0/8" may be pre-configured to prevent the exhaustion of IP addresses. Approximaly 160 million IP addresses are included, of which about 160,000 IP addresses are reserved for each AP for further assignment. As shown in Figure 5, "10.0.0.1" is assigned to each AP as its virtual gateway IP address (lan port address). The network address range of AP1 is from "10.0.0.2" to "10.0.63.255", the network address range of AP2 is from "10.0.64.1" to "10.0.127.255", the same rule applies to AP3...APn (only AP1, AP2, and AP3 are shown in Figure 5). After the configuration is completed, the network address ranges of each of the APs do not conflict with each other. When the user terminal C roams from one AP to another, IP address conflict will not occur, and the network is still available to the user terminal after the roaming process. In addition, the above-mentioned network addresses are configured by a DHCP address pool in the same network domain, so the roaming of the user terminal C will not incur the problem that the network address cannot be identified.

In this embodiment, configuration parameters of the DHCP address pool are also included in the configuration scheme as the access parameters. More specifically, the configuration of the DHCP address pool may be achieved by using a dedicated DHCP address configuration server. Accordingly, the configuration of other access parameters, such as the gateway MAC addresses and the gateway IP addresses, may be achieved by using a dedicated configuration server. That is to say, the configuration server C may comprise the DHCP address configuration server and another dedicated configuration server (not shown in Figures).

Of course, the configuration of the DHCP address pool and the configuration of the other access parameters may be achieved in a same server for easy configuration of the management personnel, and details will not be repeated herein.

The working principle of the wireless access system is illustrated by way of a specific embodiment:
With reference to Figure 4, AP 1 is adjacent to AP 2, and the AP 1 and the AP 2 release the same SSID, and provide the same authentication method. The user terminal C detects the surrounding wireless network information, and it detects that the AP 1 has a stronger signal strength. Then the user terminal C determines to access the AP1, and completes the access (e.g., wireless link access) process and the subsequent authentication process with the AP1 (this process can be done according to the prior art, so details will not be repeated herein). The user terminal C sends a DHCP request message to the AP1 to obtain the IP address assigned by the AP1, followed by sending an ARP request message to the AP1 to detect the network environment of the AP1. Finally, network access is completed.

When detecting that the signal strength of the AP 1 decreases gradually, and that the signal strength of the AP 2 gradually increases gradually (for example, gradually move away from the AP 1 and move toward the AP 2), the user terminal C decides to roam to the AP 2. At this point, the user terminal C may send a roaming request to the AP2 by using the following two methods.

Method 1: the user terminal C sends a DHCP request to the AP2 by using the IP address assigned by the AP1, and the AP2 detects whether the IP address of the user terminal C is accessible to AP2. Due to the configuration of the wireless access system, the AP 1 and the AP2 are in the same network environment and belong to the same two-layer virtual network domain, so the AP 2 is capable of detecting and identifying the IP address assigned to the user terminal C by the AP 1. The AP 2 then may provide DHCP ack message to the user terminal C, indicating that the IP address is accessible and the wireless roaming is successful.

Method 2: the user terminal C sends an ARP request to the AP2 by using the IP address assigned by the AP 1 to verify whether the network environment is available. The default gateway IP address and the gateway MAC address of the user terminal C are the addresses assigned by the AP1. The AP 2 compares the network environment from the user terminal C with its own network environment. Due to the configuration of the wireless access system, the AP1 and the AP2 are in the same network environment, so the AP 2 may send arp response message back to the user terminal C, indicating that the wireless roaming is successful.

In conclusion, based on the fact that network information of the virtual access networks in the wireless access system is the same, the DHCP address is configured in the same two-layer virtual network domain. For the user terminal C, the network environment is substantially the same before roaming operations and after roaming operations. Therefore, the wireless roaming can be smoothly completed.

In a preferred embodiment of the invention, based on the above-mentioned wireless access system, a method for configuring the wireless access system is provided herein. In the configuration method:
a wireless access system is provided, the wireless access system comprises: a plurality of wireless routing devices, capable of wireless roaming, arranged in continuous geographic areas, respectively, and a configuration server:
a virtual access network is configured in each of the plurality of wireless routing devices, the virtual access network is constructed by using a local area network of the wireless routing device, the virtual access network is accessed by a user terminal within a network coverage of the wireless routing device;
a forwarding unit is provided in each of the plurality of wireless routing devices, and is configured to forward external data received by the virtual access network to an external network;
in this wireless access system, the user terminals are initially connected to the different wireless routing devices, respectively;
as shown in Figure 6, the configuration method comprises:
   Step S1, pre-setting a configuration scheme in the configuration server, the configuration scheme comprising configuration information for configuring the access parameters of each of the virtual access networks;
   Step S2, issuing, by the configuration server, the configuration scheme to each of the plurality of wireless routing devices; and
   Step S3, providing a configuration unit in each of the plurality of wireless routing devices, configuring, by each of the configuration units, the corresponding virtual access network according to the configuration scheme so as to configure all of the virtual access networks with uniform access parameters.

In a preferred embodiment of the present invention, the access parameters comprise a gateway IP address and a gateway MAC address of the virtual access network;
in Step S3, each of the configuration units configures the corresponding virtual access network, so that each of the virtual access networks has the same gate IP address; and
each of the configuration units configures the corresponding virtual access network, so that each of the virtual access networks has the same gate MAC address.

In a preferred embodiment of the present invention, the access parameters further comprise a network address range of the virtual access network;
in Step S1, a Dynamic Host Configuration Protocol (DHCP) address pool is pre-configured on the configuration server by a user, a network address range is assigned to each of the virtual access networks to be configured in the DHCP address pool, and the network address ranges of the virtual access networks do not conflict with each other; and
in step S3, each of the configuration units configures the network address range of the corresponding virtual access network according to the configuration scheme issued.

In a preferred embodiment of the present invention, the device access ranges of adjacent virtual access networks have an overlapping portion.

In a preferred embodiment of the present invention, a wireless routing device is provided, the wireless routing device is incorporated into the above-mentioned wireless access system, and is connected to a configuration server;
as seen in Figure 2, the wireless routing device A comprises:
a virtual access network 1 constructed by using a local area network of the wireless routing device, the virtual access network 1 is accessed by a user terminal C within a network coverage of the wireless routing device A;
a forwarding unit 2, connected to the virtual access network 1, and configured to forward external data received by the virtual access network 1 to an external network D;
a configuration unit 3, connected to the virtual access network 1, the configuration server B issues a configuration scheme to the configuration unit 3, and is configured to configure various access parameters of the virtual access network 1 constructed in the virtual access network according to the configuration scheme;
all of the wireless routing devices A in the wireless access system are configured to configure uniform access parameters.

The above descriptions are only the preferred embodiments of the invention, not thus limiting the embodiments and scope of the invention. Those skilled in the art should be able to realize that the schemes obtained from the content of specification and drawings of the invention are within the scope of the invention.

## Claims

1. A wireless access system allowing wireless roaming of a user terminal, the wireless access system comprising:
a plurality of wireless routing devices, capable of wireless roaming, arranged in continuous geographic areas, respectively, wherein each of the plurality of wireless routing devices comprise:
a virtual access network constructed by using a local area network of the wireless routing device, the virtual access network being accessed by a user terminal within a network coverage of the wireless routing device;
a forwarding unit, connected to the virtual access network, and configured to forward external data received by the virtual access network to an external network;
a configuration unit, connected to the virtual access network, and configured to configure various access parameters of the virtual access network constructed in the virtual access network;
a configuration server, connected to each of the wireless routing devices, configured to issue a configuration scheme to each configuration unit so as to control the configuration units to configure all of the plurality of wireless routing devices with uniform access parameters;
wherein the virtual access network works in a three-layer network mode.

2. The wireless access system of claim 1, wherein the access parameters comprise a gateway IP address and a gateway MAC address of the virtual access network;
each of the virtual access networks has the same gate IP address; and
each of the virtual access networks has the same gate MAC address.

3. The wireless access system of claim 1, wherein the access parameters further comprise a network address range of the virtual access network;
wherein a Dynamic Host Configuration Protocol (DHCP) address pool is pre-configured on the configuration server, a network address range is assigned to each of the virtual access networks in the DHCP address pool, and the network address ranges of the virtual access networks do not conflict with each other.

4. The wireless access system of claim 1, wherein device access ranges of adjacent virtual access networks have an overlapping portion.

5. A method for configuring a wireless access system allowing the wireless roaming of a device, wherein
a wireless access system is provided, the wireless access system comprises: a plurality of wireless routing devices, capable of wireless roaming, arranged in continuous geographic areas, respectively, and a configuration server:
a virtual access network is configured in each of the plurality of wireless routing devices, the virtual access network is constructed by using a local area network of the wireless routing device, the virtual access network is accessed by a user terminal within a network coverage of the wireless routing device;
a forwarding unit is provided in each of the plurality of wireless routing devices, and is configured to forward external data received by the virtual access network to an external network;
the user terminal initially accesses each of the plurality of wireless routing devices in the wireless access system;
wherein the configuration method comprises:
Step S1, pre-setting a configuration scheme in the configuration server, the configuration scheme comprising configuration information for configuring the access parameters of each of the virtual access networks;
Step S2, issuing, by the configuration server, the configuration scheme to each of the plurality of wireless routing devices; and
Step S3, providing a configuration unit in each of the plurality of wireless routing devices, configuring, by each of the configuration units, the corresponding virtual access network according to the configuration scheme so as to configure all of the virtual access networks with uniform access parameters.

6. The configuration method of claim 5, wherein the access parameters comprise a gateway IP address and a gateway MAC address of the virtual access network;
in Step S3, each of the configuration units configures the corresponding virtual access network, so that each of the virtual access networks has the same gate IP address; and
each of the configuration units configures the corresponding virtual access network, so that each of the virtual access networks has the same gate MAC address.

7. The configuration method of claim 5, wherein the access parameters further comprise a network address range of the virtual access network;
in Step S1, a Dynamic Host Configuration Protocol (DHCP) address pool is pre-configured on the configuration server by a user, a network address range is assigned to each of the virtual access networks to be configured in the DHCP address pool, and the network address ranges of the virtual access networks do not conflict with each other; and
in step S3, each of the configuration units configures the network address range of the corresponding virtual access network according to the configuration scheme issued.

8. The configuration method of claim 5, wherein the device access ranges of adjacent virtual access networks have an overlapping portion.

9. A wireless routing device, wherein the wireless routing device is incorporated into the wireless access system, and is connected to a configuration server;
the wireless routing device comprises:
a virtual access network constructed by using a local area network of the wireless routing device, the virtual access network is accessed by a user terminal within a network coverage of the wireless routing device;
a forwarding unit, connected to the virtual access network, and configured to forward external data received by the virtual access network to an external network;
a configuration unit, connected to the virtual access network, the configuration server issues a configuration scheme to the configuration unit, and is configured to configure various access parameters of the virtual access network constructed in the virtual access network according to the configuration scheme;
all of the wireless routing devices in the wireless access system are configured to configure uniform access parameters.
